(19) Europäisches Patentamt / European Patent Office / Office européen des brevets

(11) **EP 2 717 445 B1**

(12) **FASCICULE DE BREVET EUROPEEN**

(45) Date de publication et mention
de la délivrance du brevet:
**28.09.2016 Bulletin 2016/39**

(51) Int Cl.:
*H02M 1/32* (2007.01)    *H02M 7/5387* (2007.01)

(21) Numéro de dépôt: **13184058.9**

(22) Date de dépôt: **12.09.2013**

(54) **Procédé de commande mis en oeuvre dans un convertisseur de puissance pour assurer la détectabilité d'un court-circuit**

Steuerungsverfahren in einem Leistungswandler zur Sicherstellung der Feststellbarkeit eines Kurzschlusses

Control method in a power converter to ensure the detectability of a short-circuit

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.10.2012 FR 1259430**

(43) Date de publication de la demande:
**09.04.2014 Bulletin 2014/15**

(73) Titulaire: **Schneider Toshiba Inverter Europe SAS 27120 Pacy sur Eure (FR)**

(72) Inventeurs:
• **Devos, Thomas**
**78955 Carrières sous Poissy (FR)**

• **Allaert, Yves-Laurent**
**27200 VERNON (FR)**

(74) Mandataire: **Dufresne, Thierry et al
Schneider Electric Industries SAS
Service Propriété Industrielle
35 rue Joseph Monier - CS 30323
92506 Rueil-Malmaison Cedex (FR)**

(56) Documents cités:
**EP-A1- 2 246 968        JP-A- 2000 245 142
US-A1- 2011 007 537**

EP 2 717 445 B1

**Description**

**Domaine technique de l'invention**

La présente invention se rapporte à un procédé de commande mis en oeuvre dans un convertisseur de puissance pour assurer la détectabilité d'un court-circuit. L'invention concerne également le convertisseur de puissance agencé pour mettre en oeuvre le procédé.

**Etat de la technique**

Le document EP2246968A1 présente déjà un convertisseur de puissance pouvant détecter un court-circuit pour éviter la détérioration des transistors de puissance. De manière connue, un convertisseur de puissance de type variateur de vitesse comporte un étage onduleur doté de plusieurs bras de commutations connectés par des phases de sortie à une charge électrique. Chaque bras de commutation comporte par exemple deux modules IGBT commandés par une unité de commande pour appliquer une tension à la charge électrique.

Lors du démarrage de la charge électrique ou à faible fréquence de sortie, la tension appliquée aux bornes de la charge reste faible pendant une durée relativement longue. Pendant cette phase de démarrage, les protections contre les courts-circuits ne sont pas efficaces ou sont inactives. Par ailleurs, durant cette phase, le variateur de vitesse n'est pas à même de détecter l'apparition d'un court circuit entre deux de ses phases de sortie. Un module IGBT est certes capable de supporter des rafales de court-circuit pendant une durée d'une dizaine de millisecondes mais cette durée ne doit pas se prolonger, sous peine de détruire le module IGBT.

Le but de l'invention est donc de proposer un procédé de commande mis en oeuvre dans le convertisseur de puissance pour assurer la détectabilité d'un court circuit entre deux de ses phases de sortie lors du démarrage de la charge électrique.

**Exposé de l'invention**

Ce but est atteint par un procédé de commande mis en oeuvre dans un convertisseur de puissance, ledit convertisseur de puissance comportant au moins deux bras de commutation connectés en parallèle par deux phases de sortie à une charge électrique et une unité de commande agencée pour commander le premier bras de commutation et le deuxième bras de commutation en vue d'appliquer une impulsion de tension à la charge électrique, le procédé étant caractérisé en ce qu'il comporte :

-    une étape de détermination d'une correction à appliquer à l'impulsion de tension en vue d'obtenir une impulsion de tension corrigée, ladite impulsion de tension corrigée étant d'une durée supérieure à l'impulsion de tension et supérieure à une valeur seuil de détectabilité d'un court circuit entre les deux phases de sortie.

Selon une particularité, l'impulsion de tension corrigée est déterminée par une commande en modulation de largeur d'impulsion dans laquelle une porteuse est comparée avec deux tensions de consigne.

Selon une autre particularité, le procédé comporte une étape de détermination d'une valeur de correction à appliquer à chaque tension de consigne.

L'invention concerne également un convertisseur de puissance comportant au moins deux bras de commutation connectés en parallèle par deux phases de sortie à une charge électrique et une unité de commande agencée pour commander le premier bras de commutation et le deuxième bras de commutation en vue d'appliquer une impulsion de tension à la charge électrique, ledit convertisseur étant caractérisé en ce que :

-    l'unité de commande est agencée pour déterminer une correction à appliquer à l'impulsion de tension en vue d'obtenir une impulsion de tension corrigée, ladite impulsion de tension corrigée étant d'une durée supérieure à l'impulsion de tension et supérieure à une valeur seuil de détectabilité d'un court circuit entre les deux phases de sortie.

Selon une particularité, l'impulsion de tension corrigée est déterminée par une commande en modulation de largeur d'impulsion dans laquelle une porteuse est comparée avec deux tensions de consigne.

Selon une autre particularité, l'unité de commande est agencée pour déterminer une valeur de correction à appliquer à chaque tension de consigne.

Selon une autre particularité, la valeur seuil de détectabilité est mémorisée dans une mémoire de l'unité de commande.

## Brève description des figures

D'autres caractéristiques et avantages vont apparaître dans la description détaillée qui suit faite en regard des dessins annexés dans lesquels :

- la figure 1 représente un convertisseur de puissance de type variateur de vitesse connecté à une charge électrique,

- les figures 2A à 2C montrent des diagrammes illustrant le principe de fonctionnement d'une commande classique en modulation de largeur d'impulsion,

- les figures 3A et 3B montrent des diagrammes illustrant le principe de fonctionnement d'une commande en modulation de largeur d'impulsion, réalisée selon un premier mode de réalisation de l'invention,

- les figures 4A et 4B montrent des diagrammes illustrant le principe de fonctionnement d'une commande en modulation de largeur d'impulsion, réalisée selon un deuxième mode de réalisation de l'invention.

## Description détaillée d'au moins un mode de réalisation

L'invention concerne un convertisseur de puissance et un procédé de commande mis en oeuvre dans ce convertisseur de puissance.

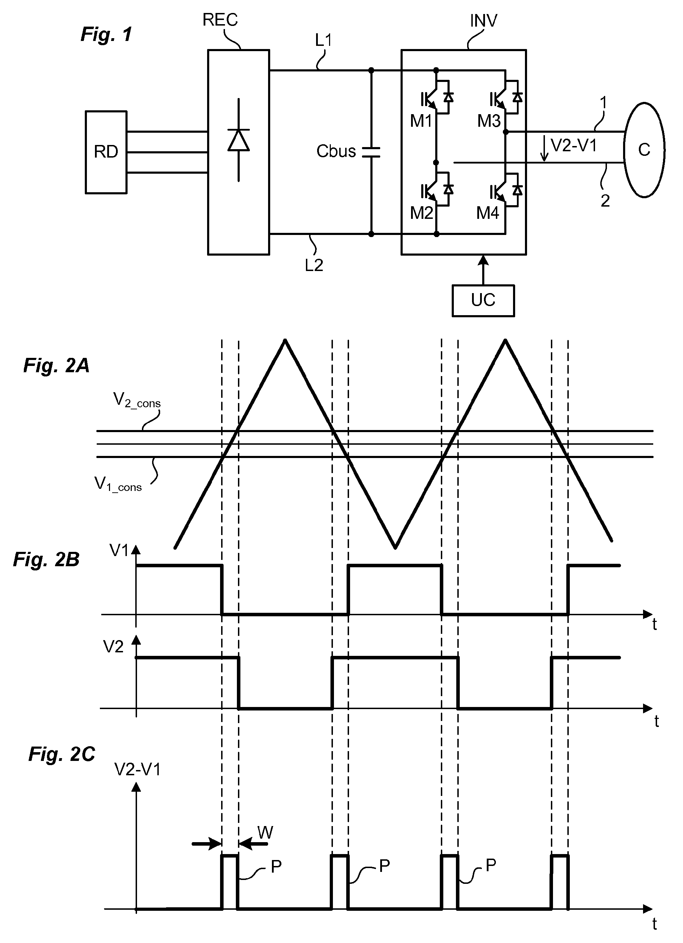

Selon l'invention, le convertisseur de puissance est destiné à la commande d'une charge électrique C. Il comporte principalement un étage onduleur INV connecté par des phases de sortie 1, 2 à la charge électrique C. Sur la figure 1, l'étage onduleur INV est monophasé. Il comporte ainsi deux bras de commutation connectés chacun par une phase de sortie 1, 2 distincte à la charge électrique C. Dans la suite de la description, pour des raisons de simplification, l'invention est décrite pour un convertisseur de puissance à étage onduleur monophasé. Cependant, il faut comprendre qu'elle s'applique également à un convertisseur de puissance comportant un étage onduleur multiphasé. De manière connue, chaque bras de commutation de l'étage onduleur comporte au moins deux modules de commutation M1-M4 reliés en série. Le point milieu situé entre les deux modules est connecté à la charge électrique C. Les bras de commutation sont connectés en parallèle entre deux lignes d'alimentation L1, L2, une première ligne d'alimentation L1 et une deuxième ligne d'alimentation L2. Entre ces deux lignes d'alimentation est appliquée une tension continue, maintenue constante par un condensateur de bus Cbus connecté en parallèle des bras de commutation. Sur les bras de commutation, les modules de commutation M1-M4 comportent par exemple des transistors IGBT ("Insulated Gate Bipolar Transistor"). Un convertisseur de puissance de type variateur de vitesse comporte en outre un étage redresseur REC connecté au bus continu d'alimentation, en amont du condensateur de bus Cbus. Cet étage redresseur REC est relié à un réseau d'alimentation RD délivrant une tension alternative.

Sur chaque bras de commutation, les modules de commutation M1-M4 sont commandés à l'ouverture ou à la fermeture par une unité de commande UC en vue d'appliquer des tensions V1, V2 sur la phase de sortie reliant ledit bras de commutation à la charge électrique C. Chaque bras de commutation est commandé par l'unité de commande UC en tenant compte d'une tension de consigne $V_{1\_cons}$, $V_{2\_cons}$ à appliquer à la charge électrique C.

De manière connue, les tensions V1, V2 peuvent être appliquées à la charge électrique sous la forme d'impulsions générées par une commande en Modulation de largeur d'impulsion (ci-après MLI) gérée par l'unité de commande UC. Dans une commande en MLI, chaque tension de consigne est comparée à une porteuse, par exemple de forme triangulaire en dent de scie (figure 2A), en vue d'en déduire les instants de commutation de chaque module et l'impulsion de tension appliquée sur la phase de sortie correspondante (figure 2B). La figure 2C montre les impulsions P de tension résultantes appliquées entre les deux phases de sortie 1, 2 du convertisseur.

Au démarrage de la charge électrique C, les impulsions P de tension appliquées entre les deux phases de sortie 1, 2 présentent une largeur W (figure 2C), c'est-à-dire une durée, trop faible pour permettre la détection d'un court-circuit entre les deux phases 1, 2. Le principe de l'invention est d'appliquer une correction à au moins certaines impulsions de tension en allongeant leur durée, afin d'assurer la détectabilité d'un court-circuit entre les deux phases 1, 2.

Dans le cadre d'une commande en MLI, la modification de l'impulsion de tension est réalisée en corrigeant les tensions de consigne $V_{1\_cons}$, $V_{2\_cons}$ à appliquer sur chaque phase de sortie 1, 2. Les valeurs de correction $V_{corr1}$, $V_{corr2}$ appliquées respectivement à chaque tension de consigne $V_{1\_cons3}$ $V_{2\_cons}$ sont déterminées pour garantir que certaines impulsions P1, P2 de tension corrigées disposent d'une largeur supérieure à une valeur seuil $W_{TH}$ de détectabilité d'un court-circuit. Par ailleurs, les valeurs de corrections $V_{corr1}$, $V_{corr2}$ ne doivent pas modifier la valeur de la tension moyenne entre phases. Pour cela, les valeurs de correction Vcorr1, Vcorr2 sont ajoutées puis soustraites aux tensions de consigne. Cette règle peut s'appliquer sur une demi-période de découpage, sur une période de découpage ou sur toute autre période déterminée, multiple de la période de découpage.

Garantir la détectabilité d'un court-circuit tout en conservant une tension moyenne entre phases identique peut être réalisé de plusieurs manières, parmi lesquelles :

- La première solution consiste à déterminer les valeurs de correction de manière à ce que toutes les impulsions P1, P2 de tension corrigées présentent une largeur d'impulsion supérieure ou égale à la valeur seuil $W_{TH}$ de détectabilité d'un court-circuit.

- La deuxième solution consiste à déterminer les valeurs de correction suffisantes pour que seulement certaines impulsions (et non toutes les impulsions) corrigées présentent une largeur supérieure à la valeur seuil $W_{TH}$ de détectabilité d'un court-circuit. Dans cette solution, en cas de court-circuit, un module IGBT sera éventuellement amené à supporter plusieurs courants de court-circuit brefs avant qu'une impulsion de tension d'une largeur supérieure ou égale à la valeur seuil $W_{TH}$ de détectabilité du court-circuit ne soit appliquée à la charge électrique C. Comparé à la première solution, cette deuxième solution permet en outre de réduire les ondulations de courant.

Dans le cas général, il n'y a pas de contraintes sur les différentes tensions considérées, ni sur les tensions de correction $V_{corr1}$ et $V_{corr2}$.

On peut donc choisir indépendamment les tensions de correction $V_{corr1}$ et $V_{corr2}$.

Cependant, si on ne veut pas modifier la tension de mode commun (comme sur les figures), il faut rajouter une contrainte.

Les tensions de consignes respectent l'équation suivante :

$$V_{1\_cons} + V_{2\_cons} = 2V_N$$

Avec $V_N$ qui correspond au potentiel milieu de la charge.

Sans modification du potentiel milieu, on a :

$$V_{1\_ref} + V_{2\_ref} = 2V_N$$

Avec

$$V_{1\_ref} = V_{1\_cons} + V_{corr1}$$

et

$$V_{2\_ref} = V_{2\_cons} + V_{corr2}$$

On a alors :

$$(V_{1\_cons} + V_{corr1}) + (V_{2\_cons} + V_{corr2}) = 2V_N$$

$$\text{Comme } V_{1\_cons} + V_{2\_cons} = 2V_N$$

On obtient :

$$V_{corr1} + V_{corr2} = 0$$

Sur les figures annexées, dans un fonctionnement en monophasé, le module de la valeur de correction $V_{corr1}$ appliquée à la première tension de consigne $V_{1\_cons}$ et le module de la valeur de correction $V_{corr2}$ appliquée à la deuxième tension de consigne $V_{2\_cons}$ sont donc égaux.

Dans le cas d'un onduleur monophasé, et dans la première solution décrite ci-dessus, la valeur de correction $V_{corr}$ (égale au module de $V_{corr1}$ et de $V_{corr2}$) à appliquer aux tensions de consigne $V_{1\_cons}$, $V_{2\_cons}$ doit ainsi répondre aux deux conditions suivantes :

$$\left\| \left( V_{1\_cons} - V_{corr} \right) - \left( V_{2\_cons} + V_{corr} \right) \right\| \geq W_{TH} \frac{V_{bus}}{2}$$

$$\left\| \left( V_{1\_cons} + V_{corr} \right) - \left( V_{2\_cons} - V_{corr} \right) \right\| \geq W_{TH} \frac{V_{bus}}{2}$$

Ce qui donne :

$$\left\| V_{1\_cons} - V_{2\_cons} - 2 \ V_{corr} \right\| \geq W_{TH} \frac{V_{bus}}{2}$$

$$\left\| V_{1\_cons} - V_{2\_cons} + 2 \ V_{corr} \right\| \geq W_{TH} \frac{V_{bus}}{2}$$

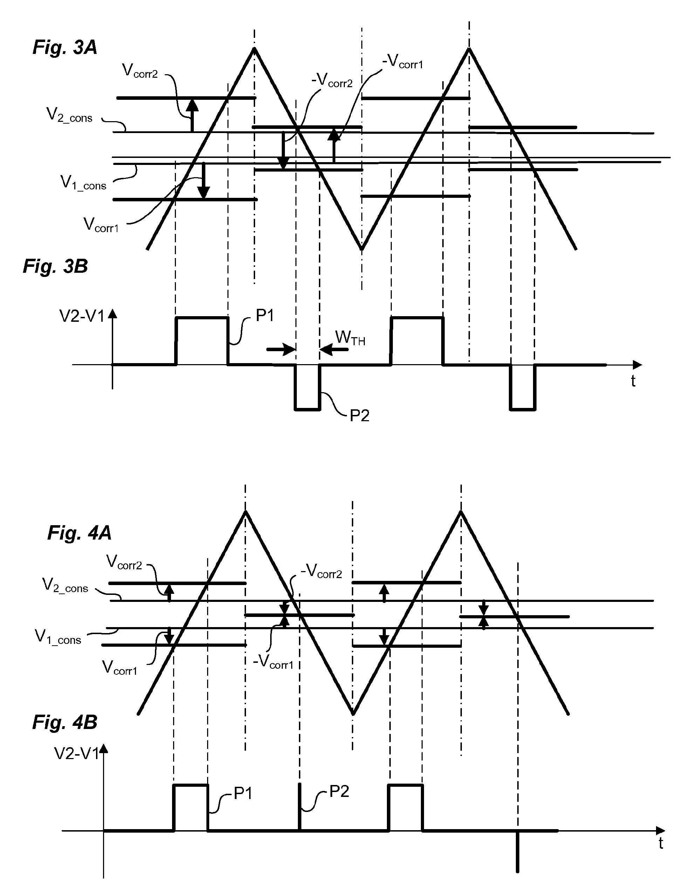

Sur la figure 3A, sur la première demi-période de découpage, la valeur de correction $V_{corr1}$ est ainsi ajoutée à la première tension de consigne $V_{1\_cons}$ puis retranchée à la première tension de consigne $V_{1\_cons}$ et la valeur de correction $V_{corr2}$ est ajoutée à la deuxième tension de consigne $V_{2\_cons}$ puis retranchée à la deuxième tension de consigne $V_{2\_cons}$. Sur la figure 3B, les deux impulsions P1, P2 de tension corrigées générées présentent ainsi une durée supérieure à la valeur seuil $W_{TH}$ de détectabilité d'un court-circuit entre les phases de sortie. Par ailleurs, on remarque que la deuxième impulsion P2 de tension corrigée générée est négative. La somme de la première impulsion P1 de tension et de la deuxième impulsion P2 de tension corrigée générées équivaut à la somme des deux impulsions de tensions P générées sans l'application de la valeur de correction (figure 2C). La mise en place de l'invention ne perturbe en rien le fonctionnement de la charge électrique C, la tension moyenne appliquée restant identique sur la période de découpage.

Toujours dans le cas d'un onduleur monophasé, dans le cas de la deuxième solution décrite ci-dessus, la valeur de correction Vcorr à appliquer aux tensions de consigne V1_cons, V2_cons doit ainsi répondre à la condition suivante :

$$\max\left( \left\| V_{1\_cons} - V_{2\_cons} - 2 \ V_{corr} \right\|, \left\| V_{1\_cons} - V_{2\_cons} + 2 \ V_{corr} \right\| \right) \geq W_{TH} \frac{V_{bus}}{2}$$

Dans cette deuxième solution, sur une demi-période de découpage, seule l'une (P1) des deux impulsions de tension corrigées présente une largeur supérieure à la valeur seuil $W_{TH}$ de détectabilité. Les valeurs de correction Vcorr1, Vcorr2 appliquées sont plus faibles que dans la première solution, ce qui permet de limiter les ondulations du courant dans la charge électrique C.

Sur la figure 4A, sur la première demi-période de découpage, la valeur de correction $V_{corr1}$ est ainsi ajoutée à la première tension de consigne $V_{1\_cons}$ puis retranchée à la première tension de consigne $V_{1\_cons}$ et la valeur de correction Vcorr2 est ajoutée à la deuxième tension de consigne $V_{2\_cons}$ puis retranchée à la deuxième tension de consigne $V_{2\_cons}$. Sur la figure 4B, la première impulsion P1 de tension corrigée appliquée à la charge électrique C présente une durée supérieure à la valeur seuil $W_{TH}$ de détectabilité d'un court-circuit entre phases. En revanche, ce n'est pas le cas de la deuxième impulsion P2 de tension corrigée générée lors de la même demi-période de découpage. La deuxième impulsion P2 de tension corrigée est d'une durée quasi-nulle. La résultante de la première impulsion P1 de tension corrigée et de la deuxième impulsion P2 de tension corrigée correspond la somme des deux impulsions P de tension générées sans l'apport de l'invention (figure 2C). Par conséquent, la tension moyenne appliquée à la charge reste identique.

Bien entendu, le principe de l'invention décrit ci-dessus est applicable pour une commande en MLI intégrant des temps morts (d) entre les commutations des modules. Le principe décrit ci-dessus reste valable, à l'exception du fait que le signe des courants circulant dans chaque phase de sortie doit être pris en compte dans la détermination de la valeur de correction $V_{corr}$.

On a alors les deux relations suivantes :

$$\left\| V_{1\_cons} - V_{2\_cons} + \frac{d}{2}(\pm\,\mathrm{sign}(I_1)\pm\mathrm{sign}(I_2)) - 2\ V_{corr} \right\| \ge W_{TH}\,\frac{V_{bus}}{2}$$

$$\left\| V_{1\_cons} - V_{2\_cons} + \frac{d}{2}(\pm\,\mathrm{sign}(I_1)\pm\mathrm{sign}(I_2)) + 2\ V_{corr} \right\| \ge W_{TH}\,\frac{V_{bus}}{2}$$

Par ailleurs, le principe décrit ci-dessus peut s'appliquer pour une commande en MLI différente, par exemple avec une porteuse asymétrique, ou pour toute autre méthode permettant d'obtenir les impulsions de tension à appliquer à la charge électrique.

Le procédé de commande décri ci-dessus, visant à corriger les impulsions de tension, est bien entendu mis en oeuvre dans l'unité de commande UC ou dans une unité dédiée (ex : ASIC). La valeur seuil $W_{TH}$ de détectabilité d'un court-circuit est par exemple mémorisée dans une mémoire de l'unité de commande UC.

**Revendications**

1. Procédé de commande mis en oeuvre dans un convertisseur de puissance, ledit convertisseur de puissance comportant au moins deux bras de commutation connectés en parallèle par deux phases de sortie (1, 2) à une charge électrique (C) et une unité de commande (UC) agencée pour commander le premier bras de commutation et le deuxième bras de commutation en vue d'appliquer une impulsion de tension (P) à la charge électrique, le procédé étant **caractérisé en ce qu'**il comporte :

   - une étape de détermination d'une correction à appliquer à l'impulsion de tension en vue d'obtenir une impulsion de tension corrigée (P1, P2), ladite impulsion de tension corrigée (P1, P2) étant d'une durée supérieure à l'impulsion de tension et supérieure à une valeur seuil ($W_{TH}$) de détectabilité d'un court circuit entre les deux phases de sortie (1, 2).

2. Procédé selon la revendication 1, **caractérisé en ce que** l'impulsion de tension corrigée est déterminée par une commande en modulation de largeur d'impulsion dans laquelle une porteuse est comparée avec deux tensions de consigne ($V_{1\_cons}$, $V_{2\_cons}$).

3. Procédé selon la revendication 2, **caractérisé en ce qu'**il comporte une étape de détermination d'une valeur de correction ($V_{corr1}$, $V_{corr2}$) à appliquer à chaque tension de consigne ($V_{1\_cons}$, $V_{2\_cons}$).

4. Convertisseur de puissance comportant au moins deux bras de commutation connectés en parallèle par deux phases de sortie (1, 2) à une charge électrique (C) et une unité de commande (UC) agencée pour commander le premier bras de commutation et le deuxième bras de commutation en vue d'appliquer une impulsion de tension (P) à la charge électrique (C), ledit convertisseur étant **caractérisé en ce que** :

   - l'unité de commande (UC) est agencée pour déterminer une correction à appliquer à l'impulsion de tension en vue d'obtenir une impulsion de tension corrigée (P1, P2), ladite impulsion de tension corrigée (P1, P2) étant d'une durée supérieure à l'impulsion de tension et supérieure à une valeur seuil ($W_{TH}$) de détectabilité d'un court circuit entre les deux phases de sortie (1, 2).

5. Convertisseur de puissance selon la revendication 4, **caractérisé en ce que** l'impulsion de tension corrigée est déterminée par une commande en modulation de largeur d'impulsion dans laquelle une porteuse est comparée avec deux tensions de consigne ($V_{1\_cons}$, $V_{2\_cons}$).

6. Convertisseur de puissance selon la revendication 5, **caractérisé en ce que** l'unité de commande (UC) est agencée pour déterminer une valeur de correction ($V_{corr1}$, $V_{corr2}$) à appliquer à chaque tension de consigne ($V_{1\_cons}$, $V_{2\_cons}$).

7. Convertisseur de puissance selon l'une des revendications 4 à 6, **caractérisé en ce que** la valeur seuil (WTH) de détectabilité est mémorisée dans une mémoire de l'unité de commande (UC).

**Patentansprüche**

1. Steuerungsverfahren, welches in einem Leistungswandler durchgeführt wird, wobei der Leistungswandler mindestens zwei Schaltarme, die durch zwei Ausgangsphasen (1, 2) mit einer elektrischen Ladung (C) parallelgeschaltet sind, und eine Steuereinheit (UC) umfasst, die ausgelegt ist, den ersten Schaltarm und den zweiten Schaltarm zu steuern, um einen Spannungsimpuls (P) an die elektrische Ladung anzulegen, wobei das Verfahren **dadurch gekennzeichnet ist, dass** dieses umfasst:

   - einen Schritt der Bestimmung einer Korrektur, die auf den Spannungsimpuls anzuwenden ist, um einen korrigierten Spannungsimpuls (P1, P2) zu erhalten, wobei der korrigierte Spannungsimpuls (P1, P2) eine Dauer hat, die größer ist als der Spannungsimpuls und größer ist als ein Schwellenwert ($W_{TH}$) der Erfassbarkeit eines Kurzschlusses zwischen den beiden Ausgangsphasen (1, 2).

2. Verfahren nach Anspruch 1, **dadurch gekennzeichnet, dass** der korrigierte Spannungsimpuls durch eine Steuerung mittels einer Impulsbreitenmodulation bestimmt wird, bei der eine Trägerwelle mit zwei Sollspannungen ($V_{1\_cons}$, $V_{2\_cons}$) verglichen wird.

3. Verfahren nach Anspruch 2, **dadurch gekennzeichnet, dass** dieses einen Schritt der Bestimmung eines Korrekturwerts ($V_{corr1}$, $V_{corr2}$) umfasst, der auf jede Sollspannung ($V_{1\_cons}$, $V_{2\_cons}$) anzuwenden ist.

4. Leistungswandler, umfassend mindestens zwei Schaltarme, die durch zwei Ausgangsphasen (1, 2) mit einer elektrischen Ladung (C) parallelgeschaltet sind, und eine Steuereinheit (UC), die ausgelegt ist, den ersten Schaltarm und den zweiten Schaltarm zu steuern, um einen Spannungsimpuls (P) an die elektrische Ladung (C) anzulegen, wobei der W andler **dadurch gekennzeichnet ist, dass**:

   - die Steuereinheit (UC) ausgelegt ist, eine Korrektur zu bestimmen, die auf den Spannungsimpuls anzuwenden ist, um einen korrigierten Spannungsimpuls (P1, P2) zu erhalten, wobei der korrigierte Spannungsimpuls (P1, P2) eine Dauer hat, die größer ist als der Spannungsimpuls und größer ist als ein Schwellenwert ($W_{TH}$) der Erfassbarkeit eines Kurzschlusses zwischen den beiden Ausgangsphasen (1, 2).

5. Leistungswandler nach Anspruch 4, **dadurch gekennzeichnet, dass** der korrigierte Spannungsimpuls durch eine Steuerung mittels einer Impulsbreitenmodulation bestimmt wird, bei der eine Trägerwelle mit zwei Sollspannungen ($V_{1\_cons}$, $V_{2\_cons}$) verglichen wird.

6. Leistungswandler nach Anspruch 5, **dadurch gekennzeichnet, dass** die Steuereinheit (UC) ausgelegt ist, einen Korrekturwert ($V_{corr1}$, $V_{corr2}$) zu bestimmen, der auf jede Sollspannung ($V_{1\_cons}$, $V_{2\_cons}$) anzuwenden ist.

7. Leistungswandler nach einem der Ansprüche 4 bis 6, **dadurch gekennzeichnet, dass** der Schwellenwert ($W_{TH}$) der Erfassbarkeit in einem Speicher der Steuereinheit (UC) gespeichert ist.

**Claims**

1. Control method implemented in a power converter, said power converter comprising at least two switching legs that are connected in parallel, via two output phases (1, 2), to an electrical load (C) and a control unit (UC) designed to control the first switching leg and the second switching leg in order to apply a voltage pulse (P) to the electrical load, the method being **characterized in that** it comprises:

   - a step of determining a correction to be applied to the voltage pulse in order to obtain a corrected voltage pulse (P1, P2), said corrected voltage pulse (P1, P2) having a longer duration than the voltage pulse and being above a threshold value ($W_{TH}$) for the detectability of a short circuit between the two output phases (1, 2).

2. Method according to Claim 1, **characterized in that** the corrected voltage pulse is determined via pulse width modulation control in which a carrier is compared with two setpoint voltages ($V_{1\_cons}$, $V_{2\_cons}$).

3. Method according to Claim 2, **characterized in that** it comprises a step of determining a correction value ($V_{corr1}$, $V_{corr2}$) to be applied to each setpoint voltage ($V_{1\_cons}$, $V_{2\_cons}$).

4. Power converter comprising at least two switching legs that are connected in parallel, via two output phases (1, 2), to an electrical load (C) and a control unit (UC) designed to control the first switching leg and the second switching leg in order to apply a voltage pulse (P) to the electrical load (C), said converter being **characterized in that**:

  - the control unit (UC) is designed to determine a correction to be applied to the voltage pulse in order to obtain a corrected voltage pulse (P1, P2), said corrected voltage pulse (P1, P2) having a longer duration than the voltage pulse and being above a threshold value ($W_{TH}$) for the detectability of a short circuit between the two output phases (1, 2).

5. Power converter according to Claim 4, **characterized in that** the corrected voltage pulse is determined via pulse width modulation control in which a carrier is compared with two setpoint voltages ($V_{1\_cons}$, $V_{2\_cons}$).

6. Power converter according to Claim 5, **characterized in that** the control unit (UC) is designed to determine a correction value ($V_{corr1}$, $V_{corr2}$) to be applied to each setpoint voltage ($V_{1\_cons}$, $V_{2\_cons}$).

7. Power converter according to one of Claims 4 to 6, **characterized in that** the detectability threshold value (WTH) is stored in a memory of the control unit (UC).

**Fig. 1**   REC   L1   INV

**Fig. 2A**

$V_{2\_cons}$

$V_{1\_cons}$

**Fig. 2B**   V1

V2

**Fig. 2C**   V2-V1

W

P   P   P

Fig. 3A

Fig. 3B

Fig. 4A

Fig. 4B

**EP 2 717 445 B1**

## RÉFÉRENCES CITÉES DANS LA DESCRIPTION

**Documents brevets cités dans la description**

- EP 2246968 A1